# EUROPEAN PATENT SPECIFICATION

(11) **EP 3 825 356 B1**
(45) Date of publication and mention of the grant of the patent: **04.05.2022**
(21) Application number: 20204564.7
(22) Date of filing: 29.10.2020
(51) Int. Cl.: C08L 9/06, B60C 1/00

(54) **TIRE RUBBER COMPOSITION AND TIRE**
REIFENKAUTSCHUKZUSAMMENSETZUNG UND REIFEN
COMPOSITION DE CAOUTCHOUC DE PNEU ET PNEU

(30) Priority: 21.11.2019 JP 2019210565
(43) Date of publication of application: 26.05.2021
(73) Proprietor: Sumitomo Rubber Industries, Ltd., Kobe-shi, Hyogo 651-0072 (JP)
(72) Inventor: HIMEDA, Shingo, Kobe-shi, Hyogo 651-0072 (JP)
(74) Representative: TBK

(56) References cited:
- EP-A1- 3 495 415
- WO-A1-2018/225478
- WO-A1-2019/156093
- WO-A1-2019/156094
- JP-A- 2019 131 154

## Description

### TECHNICAL FIELD

The present invention relates to tire rubber compositions and tires.

### BACKGROUND ART

Various techniques have been proposed for improving the chip resistance of pneumatic tires. For example, Patent Literature 1 discloses a technique of incorporating natural rubber, silica, and cyclized rubber. In recent years, however, it has become desirable to further improve chip resistance.

### CITATION LIST

### PATENT LITERATURE

Patent Literature 1: JP 2014-012768 A
Further, EP 3495415 A1 discloses a rubber composition comprising a rubber component containing diene-based rubber, a filler, and a specific compound. WO 2019/156094 A1 discloses a rubber composition including a rubber component that contains a diene rubber, a filler, a specific compound, and a fatty acid metal salt. WO 2019/156093 A1 discloses a rubber composition including a rubber component that contains a diene rubber, a filler, a specific compound, and an antidegradant containing a compound having a phenol group. JP 2019-131154 A discloses a rubber composition for crawler. WO 2018/225478 A1 discloses a rubber composition including a diene rubber, a specific compound, and carbon black.

### SUMMARY OF INVENTION

### TECHNICAL PROBLEM

The present invention aims to solve the problem and provide rubber compositions and tires having improved cut and chip resistance.

### SOLUTION TO PROBLEM

The present invention relates to a tire rubber composition, containing:
at least one rubber component wherein a total styrene content based on the total rubber component is 2% by mass or higher;
carbon black; and
a benzohydrazide compound having two or more hydroxy groups.

In the rubber composition, the total styrene content (% by mass) based on the total rubber component is preferably greater than an amount (parts by mass) of the benzohydrazide compound per 100 parts by mass of the total rubber component.

The rubber composition preferably has a styrene-butadiene rubber content of 10 to 50% by mass based on 100% by mass of the total rubber component.

The rubber composition preferably contains a styrene-butadiene rubber having a functional group containing at least one atom selected from the group consisting of a nitrogen atom, an oxygen atom, and a silicon atom.

The rubber composition preferably contains a styrene-butadiene rubber having a styrene content of 20% by mass or higher.

The rubber composition preferably has a ratio of the total styrene content (% by mass) based on the total rubber component to an amount (parts by mass) of the carbon black per 100 parts by mass of the total rubber component of 0.130 or more.

The benzohydrazide compound preferably has two hydroxy groups.

The present invention also relates to a tire, including a tire component including the rubber composition.

### ADVANTAGEOUS EFFECTS OF INVENTION

The tire rubber compositions of the present invention contain at least one rubber component wherein the total styrene content based on the total rubber component is 2% by mass or higher, carbon black, and a benzohydrazide compound having two or more hydroxy groups. Such tire rubber compositions provide improved cut and chip resistance.

### DESCRIPTION OF EMBODIMENTS

The tire rubber compositions of the present invention contain at least one rubber component wherein the total styrene content based on the total rubber component is 2% by mass or higher, carbon black, and a benzohydrazide compound having two or more hydroxy groups. Thus, the tire rubber compositions provide improved cut and chip resistance.

The reason for this advantageous effect is not exactly clear, but may be explained as follows.

Benzohydrazide compounds may interact with carbon black to improve cut and chip resistance. In particular, a benzohydrazide compound having two or more hydroxy groups has a higher polarity than other hydrazide compounds due to the presence of two or more phenolic hydroxy groups. Hence, it is believed to interact well with carbon black as well as styrene groups in the rubber component, so that cut and chip resistance can be improved.

The present invention combines a rubber component having styrene groups with carbon black and a benzohydrazide compound having two or more hydroxy groups. Thus, these components can synergistically act to improve cut and chip resistance.

In particular, the combined use of a rubber component having styrene groups and a benzohydrazide compound having two or more hydroxy groups provides synergistically improved cut and chip resistance.

Exemplary rubber components that may be used in the rubber compositions include diene rubbers.

Examples of the diene rubbers include isoprene-based rubbers, polybutadiene rubber (BR), styrene-butadiene rubber (SBR), styrene-isoprene-butadiene rubber (SIBR), ethylene-propylene-diene rubber (EPDM), chloroprene rubber (CR), and acrylonitrile-butadiene rubber (NBR). Other examples of the rubber components include butyl-based rubbers and fluororubber. These may be used alone or in combinations of two or more. SBR is preferred among these.

Moreover, SBR is preferably combined with BR and/or an isoprene-based rubber, preferably with BR and an isoprene-based rubber. In such cases, the advantageous effect can be more suitably achieved.

The rubber components preferably include rubbers having a weight average molecular weight (Mw) of 200,000 or more, more preferably 350,000 or more. The upper limit of the Mw is not limited, but is preferably 4,000,000 or less, more preferably 3,000,000 or less.

Herein, the Mw and number average molecular weight (Mn) may be determined by gel permeation chromatography (GPC) (GPC-8000 series available from Tosoh Corporation, detector: differential refractometer, column: TSKGEL SUPERMULTIPORE HZ-M available from Tosoh Corporation) calibrated with polystyrene standards.

The amount of diene rubbers based on 100% by mass of the total rubber component is preferably 20% by mass or more, more preferably 50% by mass or more, still more preferably 70% by mass or more, particularly preferably 80% by mass or more, most preferably 90% by mass or more, and may be 100% by mass. When the amount is within the range indicated above, the advantageous effect tends to be better achieved.

The rubber components may include nonmodified or modified diene rubbers.

The modified diene rubbers may be any diene rubber having a functional group interactive with a filler such as silica or carbon black. Examples include a chain end-modified diene rubber obtained by modifying at least one chain end of a diene rubber with a compound (modifier) having the functional group (i.e., a chain end-modified diene rubber terminated with the functional group); a backbone-modified diene rubber having the functional group in the backbone; a backbone- and chain end-modified diene rubber having the functional group in both the backbone and chain end (e.g., a backbone- and chain end-modified diene rubber in which the backbone has the functional group and at least one chain end is modified with the modifier); and a chain end-modified diene rubber that has been modified (coupled) with a polyfunctional compound having two or more epoxy groups in the molecule so that a hydroxy or epoxy group is introduced. These may be used alone or in combinations of two or more.

Examples of the functional group include functional groups containing at least one atom selected from the group consisting of a nitrogen atom, an oxygen atom, and a silicon atom. These may be used alone or in combinations of two or more.

Specific examples of the functional group include amino, amide, silyl, alkoxysilyl, isocyanate, imino, imidazole, urea, ether, carbonyl, oxycarbonyl, mercapto, sulfide, disulfide, sulfonyl, sulfinyl, thiocarbonyl, ammonium, imide, hydrazo, azo, diazo, carboxyl, nitrile, pyridyl, alkoxy, hydroxy, oxy, and epoxy groups. These functional groups may be substituted. To more suitably achieve the advantageous effect, amino groups (preferably amino groups whose hydrogen atom is replaced with a C1-C6 alkyl group), alkoxy groups (preferably C1-C6 alkoxy groups), and alkoxysilyl groups (preferably C1-C6 alkoxysilyl groups) are preferred among these.

Any SBR may be used, and examples include emulsion-polymerized styrene-butadiene rubber (E-SBR) and solution-polymerized styrene-butadiene rubber (S-SBR). These may be used alone or in combinations of two or more.

The SBR preferably has a styrene content of 5% by mass or higher, more preferably 10% by mass or higher, still more preferably 15% by mass or higher, particularly preferably 20% by mass or higher, most preferably 25% by mass or higher, further most preferably 30% by mass or higher, still further most preferably 35% by mass or higher, particularly most preferably 40% by mass or higher. The styrene content is also preferably 60% by mass or lower, more preferably 55% by mass or lower, still more preferably 50% by mass or lower. When the styrene content is within the range indicated above, the advantageous effect tends to be better achieved. Particularly when a styrene-butadiene rubber having a styrene content of 20% by mass or higher is present, the interaction between the benzohydrazide compound having two or more hydroxy groups and SBR is further improved, so that cut and chip resistance can be more suitably improved.

Herein, the styrene content of the rubber components is measured by ¹H-NMR analysis.

SBR products manufactured or sold by Sumitomo Chemical Co., Ltd., JSR Corporation, Asahi Kasei Corporation, Zeon Corporation, etc. may be used as the SBR.

The SBR may be nonmodified or modified SBR. Examples of the modified SBR include those into which functional groups as listed for the modified diene rubbers have been introduced. Among these, the SBR is preferably modified SBR, more preferably modified SBR having a functional group containing at least one atom selected from the group consisting of a nitrogen atom, an oxygen atom, and a silicon atom. In such cases, the interaction between the benzohydrazide compound having two or more hydroxy groups and SBR is further improved, so that cut and chip resistance can be more suitably improved.

Any BR may be used, and examples include high-cis BR which has a high cis content, BR containing syndiotactic polybutadiene crystals, and BR synthesized using rare earth catalysts (rare earth-catalyzed BR). These may be used alone or in combinations of two or more.

The BR preferably has a cis content of 20% by mass or higher, more preferably 40% by mass or higher, still more preferably 60% by mass or higher, particularly preferably 80% by mass or higher, most preferably 90% by mass or higher. The upper limit of the cis content is not limited. When the cis content is within the range indicated above, the advantageous effect tends to be better achieved.

Herein, the cis content of the rubber components may be measured by infrared absorption spectrometry.

The BR may be nonmodified or modified BR. Examples of the modified BR include those into which functional groups as listed for the modified diene rubbers have been introduced.

The BR may be commercially available from Ube Industries, Ltd., JSR Corporation, Asahi Kasei Corporation, Zeon Corporation, etc.

Examples of the isoprene-based rubbers include natural rubber (NR), polyisoprene rubber (IR), refined NR, modified NR, and modified IR. Examples of the NR include those commonly used in the tire industry such as SIR20, RSS#3, and TSR20. Any IR may be used, and examples include those commonly used in the tire industry such as IR2200. Examples of the refined NR include deproteinized natural rubber (DPNR) and highly purified natural rubber (UPNR). Examples of the modified NR include epoxidized natural rubber (ENR), hydrogenated natural rubber (HNR), and grafted natural rubber. Examples of the modified IR include epoxidized polyisoprene rubber, hydrogenated polyisoprene rubber, and grafted polyisoprene rubber. These may be used alone or in combinations of two or more. NR is preferred among these.

The rubber compositions contain at least one rubber component wherein the total styrene content based on the total rubber component is 2% by mass or higher. In other words, the rubber compositions may contain a rubber component having a predetermined styrene content or higher.

The total styrene content based on the total rubber component is 2% by mass or higher, preferably 3% by mass or higher, more preferably 5% by mass or higher, still more preferably 7% by mass or higher, particularly preferably 9% by mass or higher, most preferably 11% by mass or higher. The upper limit is not limited, but is preferably 30% by mass or lower, more preferably 25% by mass or lower, still more preferably 20% by mass or lower, particularly preferably 18% by mass or lower, most preferably 15% by mass or lower. When the total styrene content is within the range indicated above, the advantageous effect tends to be better achieved.

The amount of each rubber component based on the total rubber component is not limited as long as the total styrene content based on the total rubber component is 2% by mass or higher. Exemplary preferred amounts are described below.

The amount of SBR based on 100% by mass of the total rubber component is preferably 5% by mass or more, more preferably 10% by mass or more, still more preferably 15% by mass or more, and may be 100% by mass. However, the amount is preferably 60% by mass or less, more preferably 50% by mass or less, still more preferably 40% by mass or less. When the amount is within the range indicated above, the advantageous effect tends to be better achieved. In particular, the rubber compositions preferably have a SBR content of 10 to 50% by mass based on 100% by mass of the total rubber component. This allows the total styrene content based on the total rubber component to be more suitably adjusted to 2% by mass or higher.

The amount of BR based on 100% by mass of the total rubber component is preferably 5% by mass or more, more preferably 10% by mass or more, still more preferably 15% by mass or more, but is preferably 50% by mass or less, more preferably 40% by mass or less. When the amount is within the range indicated above, the advantageous effect tends to be better achieved.

The amount of isoprene-based rubbers based on 100% by mass of the total rubber component is preferably 5% by mass or more, more preferably 10% by mass or more, still more preferably 20% by mass or more, but is preferably 90% by mass or less, more preferably 80% by mass or less. When the amount is within the range indicated above, the advantageous effect tends to be better achieved.

The rubber compositions contain a benzohydrazide compound having two or more hydroxy groups. The compound may be a single material or a combination of two or more materials.

Herein, the term "benzohydrazide compound" refers to a compound that has one or more hydrazide groups on a benzene ring. The term "benzohydrazide compound having two or more hydroxy groups" refers to a compound that has one or more hydrazide groups and two or more hydroxy groups on a benzene ring. The benzohydrazide compound may be substituted.

The number of hydroxy groups in the benzohydrazide compound is any number not smaller than two, but is preferably five or smaller, more preferably four or smaller, still more preferably three or smaller, particularly preferably two. When the number is within the range indicated above, the advantageous effect tends to be better achieved.

Moreover, the number of hydrazide groups in the benzohydrazide compound is preferably three or smaller, more preferably two or smaller, still more preferably one. When the number is within the range indicated above, the advantageous effect tends to be better achieved.

Preferably, the number of hydroxy groups in the benzohydrazide compound is twice the number of hydrazide groups in the benzohydrazide compound. More preferably, the number of hydroxy groups in the benzohydrazide compound is two and the number of hydrazide groups in the benzohydrazide compound is one. With such a benzohydrazide compound having two phenolic hydroxy groups per one basic hydrazide group, the advantageous effect can be more suitably achieved.

Non-limiting examples of the benzohydrazide compound having two or more hydroxy groups include 2,4-dihydroxybenzohydrazide, 3,5-dihydroxybenzohydrazide, 2,3-dihydroxybenzohydrazide, 2,5-dihydroxybenzohydrazide, 2,6-dihydroxybenzohydrazide, 3,4-dihydroxybenzohydrazide, 3,6-dihydroxybenzohydrazide, 4,5-dihydroxybenzohydrazide, 4,6-dihydroxybenzohydrazide, 5,6-dihydroxybenzohydrazide, 2,3,4-trihydroxybenzohydrazide, 2,3,5-trihydroxybenzohydrazide, 2,3,6-trihydroxybenzohydrazide, 2,4,5-trihydroxybenzohydrazide, 2,4,6-trihydroxybenzohydrazide, and 2,5,6-trihydroxybenzohydrazide. These may be used alone or in combinations of two or more. Preferred among these is 2,4-dihydroxybenzohydrazide or 3,5-dihydroxybenzohydrazide.

The benzohydrazide compound having two or more hydroxy groups may be commercially available from Tokyo Chemical Industry Co., Ltd., FUJIFILM Wako Pure Chemical Corporation, etc.

The amount of the benzohydrazide compound having two or more hydroxy groups per 100 parts by mass of the total rubber component is preferably 0.5 parts by mass or more, more preferably 1 part by mass or more, still more preferably 1.5 parts by mass or more, but is preferably 20 parts by mass or less, more preferably 15 parts by mass or less, still more preferably 10 parts by mass or less, particularly preferably 5 parts by mass or less, most preferably 3 parts by mass or less. When the amount is within the range indicated above, the advantageous effect tends to be better achieved.

The total styrene content (% by mass) based on the total rubber component is preferably greater than the amount (parts by mass) of the benzohydrazide compound per 100 parts by mass of the total rubber component. In this case, the interaction of the benzohydrazide compound having two or more hydroxy groups with styrene groups in the rubber component is further improved, so that cut and chip resistance can be more suitably improved.

The difference between the total styrene content (% by mass) based on the total rubber component and the amount (parts by mass) of the benzohydrazide compound per 100 parts by mass of the total rubber component [(the total styrene content (% by mass) based on the total rubber component) - (the amount (parts by mass) of the benzohydrazide compound per 100 parts by mass of the total rubber component)] is preferably 0.5 or greater, more preferably 1 or greater, still more preferably 2 or greater, particularly preferably 3 or greater, most preferably 4 or greater. The upper limit is not limited, but is preferably 25 or smaller, more preferably 15 or smaller, still more preferably 12 or smaller, particularly preferably 10 or smaller. When the difference is within the range indicated above, the advantageous effect tends to be better achieved.

The rubber compositions contain carbon black. Examples of the carbon black include N134, N110, N220, N234, N219, N339, N330, N326, N351, N550, and N762. These may be used alone or in combinations of two or more.

The carbon black preferably has a nitrogen adsorption specific surface area (N₂SA) of 80 m²/g or more, more preferably 100 m²/g or more. The N₂SA is also preferably 200 m²/g or less, more preferably 180 m²/g or less, still more preferably 160 m²/g or less. When the N₂SA is within the range indicated above, the advantageous effect tends to be better achieved.

Herein, the nitrogen adsorption specific surface area of the carbon black may be measured in accordance with JIS K6217-2: 2001.

The carbon black preferably has a dibutyl phthalate oil absorption (DBP) of 50 mL/100 g or more, more preferably 100 mL/100 g or more. The DBP is also preferably 200 mL/100 g or less, more preferably 135 mL/100 g or less. When the DBP is within the range indicated above, the advantageous effect tends to be better achieved.

Herein, the DBP of the carbon black may be measured in accordance with JIS-K6217-4:2001.

The carbon black may be commercially available from Asahi Carbon Co., Ltd., Cabot Japan K.K., Tokai Carbon Co., Ltd., Mitsubishi Chemical Corporation, Lion Corporation, NSCC Carbon Co., Ltd., Columbia Carbon, etc.

The amount of the carbon black per 100 parts by mass of the total rubber component is preferably 5 parts by mass or more, more preferably 10 parts by mass or more, still more preferably 20 parts by mass or more, particularly preferably 30 parts by mass or more. The amount is preferably 100 parts by mass or less, more preferably 80 parts by mass or less, still more preferably 70 parts by mass or less, particularly preferably 60 parts by mass or less. When the amount is within the range indicated above, the advantageous effect tends to be better achieved.

The ratio of the total styrene content (% by mass) based on the total rubber component to the amount (parts by mass) of the carbon black per 100 parts by mass of the total rubber component is preferably 0.130 or more. Too large an amount of carbon black may inhibit the interaction of the benzohydrazide compound having two or more hydroxy groups with styrene groups in the rubber component. With a ratio within the range indicated above, however, the interaction of the benzohydrazide compound having two or more hydroxy groups with styrene groups in the rubber component is further improved, so that cut and chip resistance can be more suitably improved.

The ratio of the total styrene content (% by mass) based on the total rubber component to the amount (parts by mass) of the carbon black per 100 parts by mass of the total rubber component is more preferably 0.140 or more. The upper limit is not limited, but is preferably 0.380 or less, more preferably 0.300 or less, still more preferably 0.220 or less. When the ratio is within the range indicated above, the advantageous effect tends to be better achieved.

The rubber compositions may contain silica.

Any silica may be used, and examples include dry silica (silicic anhydride) and wet silica (hydrous silicic acid). These may be used alone or in combinations of two or more. Wet silica is preferred among these because it has a large number of silanol groups.

The silica may be commercially available from Degussa, Rhodia, Tosoh Silica Corporation, Solvay Japan, Tokuyama Corporation, etc.

The silica preferably has a nitrogen adsorption specific surface area (N₂SA) of 50 m²/g or more, more preferably 150 m²/g or more, still more preferably 200 m²/g or more. The N₂SA is also preferably 300 m²/g or less, more preferably 250 m²/g or less. When the N₂SA is within the range indicated above, the advantageous effect tends to be better achieved.

The N₂SA of the silica may be measured in accordance with ASTM D3037-81.

The amount of the silica per 100 parts by mass of the total rubber component is preferably 5 parts by mass or more, more preferably 10 parts by mass or more, but is preferably 150 parts by mass or less, more preferably 100 parts by mass or less. When the amount is within the range indicated above, the advantageous effect tends to be better achieved.

The amount of the carbon black based on 100% by mass of a total of the silica and the carbon black is preferably 20% by mass or more, more preferably 40% by mass or more, still more preferably 60% by mass or more, particularly preferably 80% by mass or more, most preferably 90% by mass or more, and may be 100% by mass. When the amount is within the range indicated above, the advantageous effect tends to be better achieved.

When the rubber compositions contain silica, they preferably contain a silane coupling agent together with the silica.

Any silane coupling agent may be used, and examples include sulfide silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyl tetrasulfide, 2-triethoxysilylethyl-N,N-dimethylthiocarbamoyl tetrasulfide, and 3-triethoxysilylpropyl methacrylate monosulfide; mercapto silane coupling agents such as 3-mercaptopropyltrimethoxysilane, 2-mercaptoethyltriethoxysilane, and NXT and NXT-Z both available from Momentive; vinyl silane coupling agents such as vinyltriethoxysilane and vinyltrimethoxysilane; amino silane coupling agents such as 3-aminopropyltriethoxysilane and 3-aminopropyltrimethoxysilane; glycidoxy silane coupling agents such as γ-glycidoxypropyltriethoxysilane and γ-glycidoxypropyltrimethoxysilane; nitro silane coupling agents such as 3-nitropropyltrimethoxysilane and 3-nitropropyltriethoxysilane; and chloro silane coupling agents such as 3-chloropropyltrimethoxysilane and 3-chloropropyltriethoxysilane. These may be used alone or in combinations of two or more. To better achieve the advantageous effect, sulfide or mercapto silane coupling agents are preferred among these.

The silane coupling agent may be commercially available from Degussa, Momentive, Shin-Etsu Silicone, Tokyo Chemical Industry Co., Ltd., AZmax. Co., Dow Corning Toray Co., Ltd., etc.

The amount of the silane coupling agent per 100 parts by mass of the silica is preferably 3 parts by mass or more, more preferably 5 parts by mass or more. When the amount is 3 parts by mass or more, the addition tends to provide an effect. The amount is also preferably 25 parts by mass or less, more preferably 20 parts by mass or less, still more preferably 15 parts by mass or less. When the amount is 25 parts by mass or less, an effect proportional to the added amount and good processability during kneading tend to be provided.

The rubber compositions may contain a plasticizer.

Herein, the term "plasticizer" refers to a material that imparts plasticity to rubber components, and conceptionally includes liquid plasticizers (plasticizers which are liquid at 25°C) and solid plasticizers (plasticizers which are solid at 25°C). Specifically, it is a component that can be extracted with acetone from the rubber composition containing it. Such plasticizers may be used alone or in combinations of two or more.

The amount of the total plasticizer (the combined amount of liquid and solid plasticizers) per 100 parts by mass of the total rubber component is preferably 5 parts by mass or more, more preferably 10 parts by mass or more, but is preferably 150 parts by mass or less, more preferably 100 parts by mass or less. When the amount is within the range indicated above, the advantageous effect tends to be better achieved.

The amount of plasticizers includes the amount of the oils contained in the rubbers (oil extended rubbers) or sulfur (oil-containing sulfur), if used.

Examples of liquid plasticizers include oils, liquid polymers (diene polymers, olefin polymers, ester polymers, etc.), liquid resins, essential oils from natural sources, such as turpentine oil, and ester plasticizers. Examples of solid plasticizers include solid resins which are solid at 25°C, such as those usually used in the tire industry. These may be used alone or in combinations of two or more. Preferred among the liquid plasticizers is at least one selected from the group consisting of oils, liquid polymers, and liquid resins, more preferably from oils, still more preferably from process oils.

Non-limiting examples of the oils include conventional oils, including process oils such as paraffinic process oils, aromatic process oils, and naphthenic process oils, low PCA (polycyclic aromatic) process oils such as TDAE and MES, vegetable oils, and mixtures thereof. These may be used alone or in combinations of two or more. Paraffinic process oils are preferred among these.

The oils may be commercially available from Idemitsu Kosan Co., Ltd., Sankyo Yuka Kogyo K.K., ENEOS Corporation, Olisoy, H&R, Hokoku Corporation, Showa Shell Sekiyu K.K., Fuji Kosan Co., Ltd., etc.

Examples of the liquid resins include resins which are liquid at 25°C, such as terpene resins (including terpene phenol resins and aromatic modified terpene resins), rosin resins, styrene resins, C5 resins, C5/C9 resins, coumarone-indene resins (including resins based on coumarone or indene alone), olefin resins, polyurethane resins, and acrylic resins.

The liquid resins may be commercially available from Maruzen Petrochemical Co., Ltd., Sumitomo Bakelite Co., Ltd., Yasuhara Chemical Co., Ltd., Tosoh Corporation, Rutgers Chemicals, BASF, Arizona Chemical, Nitto Chemical Co., Ltd., Nippon Shokubai Co., Ltd., ENEOS Corporation, Arakawa Chemical Industries, Ltd., Taoka Chemical Co., Ltd., etc.

Examples of the liquid diene polymers include those which are liquid at 25°C, such as liquid styrene-butadiene copolymers (liquid SBR), liquid polybutadiene polymers (liquid BR), liquid polyisoprene polymers (liquid IR), liquid styrene-isoprene copolymers (liquid SIR), liquid styrene-butadiene-styrene block copolymers (liquid SBS block polymers), and liquid styrene-isoprene-styrene block copolymers (liquid SIS block polymers). The chain end or backbone of the polymers may be modified with a polar group.

The liquid diene polymers may be commercially available from Sartomer, Kuraray Co., Ltd., etc.

The amount of liquid plasticizers (preferably oils) per 100 parts by mass of the total rubber component is preferably 5 parts by mass or more, more preferably 10 parts by mass or more, but is preferably 100 parts by mass or less, more preferably 50 parts by mass or less. When the amount is within the range indicated above, the advantageous effect tends to be better achieved.

The amount of plasticizers includes the amount of the oils contained in the rubbers (oil extended rubbers) or sulfur (oil-containing sulfur), if used.

Examples of solid plasticizers include solid resins (referred to simply as "resins") usually used as compounding ingredients for tires. Specific examples include terpene resins, rosin resins, styrene resins, olefin resins, C5 resins, C9 resins, C5/C9 resins, coumarone resins, indene resins, coumarone-indene resins, acrylic resins, and urethane resins. These may be used alone, or two or more of these may be used in admixture. The resins themselves may be copolymers of multiple monomer components.

The resins may be commercially available from Maruzen Petrochemical Co., Ltd., Sumitomo Bakelite Co., Ltd., Yasuhara Chemical Co., Ltd., Tosoh Corporation, Rutgers Chemicals, BASF, Arizona Chemical, Nitto Chemical Co., Ltd., Nippon Shokubai Co., Ltd., ENEOS Corporation, Arakawa Chemical Industries, Ltd., Taoka Chemical Co., Ltd., etc.

The softening point of the resins is preferably 30°C or higher, more preferably 50°C or higher, still more preferably 80°C or higher, but is preferably 200°C or lower, more preferably 160°C or lower, still more preferably 140°C or lower, particularly preferably 120°C or lower. When the softening point is within the range indicated above, the advantageous effect tends to be more suitably achieved.

Herein, the softening point of the resins is determined in accordance with JIS K 6220-1:2001 using a ring and ball softening point measuring apparatus and defined as the temperature at which the ball drops down.

The amount of solid plasticizers (preferably resins) per 100 parts by mass of the total rubber component is preferably 5 parts by mass or more, more preferably 10 parts by mass or more, but is preferably 100 parts by mass or less, more preferably 50 parts by mass or less. When the amount is within the range indicated above, the advantageous effect tends to be better achieved.

The rubber compositions preferably contain sulfur.

Examples of the sulfur include those commonly used in the rubber industry, such as powdered sulfur, precipitated sulfur, colloidal sulfur, insoluble sulfur, highly dispersible sulfur, and soluble sulfur. These may be used alone or in combinations of two or more.

The sulfur may be commercially available from Tsurumi Chemical Industry Co., Ltd., Karuizawa Sulfur Co., Ltd., Shikoku Chemicals Corporation, Flexsys, Nippon Kanryu Industry Co., Ltd., Hosoi Chemical Industry Co., Ltd., etc.

The amount of the sulfur per 100 parts by mass of the total rubber component is preferably 0.1 parts by mass or more, more preferably 0.5 parts by mass or more, still more preferably 0.8 parts by mass or more. The amount is also preferably 10 parts by mass or less, more preferably 7 parts by mass or less, still more preferably 5 parts by mass or less, particularly preferably 3 parts by mass or less, most preferably 2 parts by mass or less. When the amount is within the range indicated above, the advantageous effect tends to be better achieved.

The rubber compositions preferably contain a vulcanization accelerator.

Examples of the vulcanization accelerator include thiazole vulcanization accelerators such as 2-mercaptobenzothiazole and di-2-benzothiazolyl disulfide; thiuram vulcanization accelerators such as tetramethylthiuram disulfide (TMTD), tetrabenzylthiuram disulfide (TBzTD), and tetrakis(2-ethylhexyl)thiuram disulfide (TOT-N); sulfenamide vulcanization accelerators such as N-cyclohexyl-2-benzothiazolyl sulfenamide, N-t-butyl-2-benzothiazolyl sulfenamide, N-oxyethylene-2-benzothiazole sulfenamide, and N,N'-diisopropyl-2-benzothiazole sulfenamide; and guanidine vulcanization accelerators such as diphenylguanidine, diorthotolylguanidine, and orthotolylbiguanidine. These may be used alone or in combinations of two or more. Sulfenamide vulcanization accelerators are preferred among these.

The vulcanization accelerator may be commercially available from Kawaguchi Chemical Industry Co., Ltd., Ouchi Shinko Chemical Industrial Co., Ltd., Rhein Chemie, etc.

The amount of the vulcanization accelerator per 100 parts by mass of the total rubber component is preferably 0.5 parts by mass or more, more preferably 1 part by mass or more, but is preferably 10 parts by mass or less, more preferably 5 parts by mass or less. When the amount is within the range indicated above, the advantageous effect tends to be better achieved.

The rubber compositions preferably contain stearic acid.

The stearic acid may be a conventional one available from, for example, NOF Corporation, Kao Corporation, FUJIFILM Wako Pure Chemical Corporation, or Chiba Fatty Acid Co., Ltd.

The amount of the stearic acid per 100 parts by mass of the total rubber component is preferably 0.5 parts by mass or more, more preferably 1 part by mass or more. The amount is also preferably 5 parts by mass or less, more preferably 3 parts by mass or less. When the amount is within the range indicated above, the advantageous effect tends to be better achieved.

The rubber compositions may contain zinc oxide.

The zinc oxide may be a conventional one available from, for example, Mitsui Mining & Smelting Co., Ltd., Toho Zinc Co., Ltd., HakusuiTech Co., Ltd., Seido Chemical Industry Co., Ltd., or Sakai Chemical Industry Co., Ltd.

The amount of the zinc oxide per 100 parts by mass of the total rubber component is preferably 0.5 parts by mass or more, more preferably 1 part by mass or more, but is preferably 10 parts by mass or less, more preferably 5 parts by mass or less. When the amount is within the range indicated above, the advantageous effect tends to be better achieved.

The rubber compositions may contain an antioxidant.

Examples of the antioxidant include naphthylamine antioxidants such as phenyl-α-naphthylamine; diphenylamine antioxidants such as octylated diphenylamine and 4,4'-bis(α,α'-dimethylbenzyl)diphenylamine; p-phenylenediamine antioxidants such as N-isopropyl-N'-phenyl-p-phenylenediamine, N-(1,3-dimethylbutyl)-N'-phenyl-p-phenylenediamine, and N,N'-di-2-naphthyl-p-phenylenediamine; quinoline antioxidants such as 2,2,4-trimethyl-1,2-dihydroquinoline polymer; monophenolic antioxidants such as 2,6-di-t-butyl-4-methylphenol and styrenated phenol; and bis-, tris-, or polyphenolic antioxidants such as tetrakis[methylene-3-(3',5'-di-t-butyl-4'-hydroxyphenyl)propionate]methane. These may be used alone or in combinations of two or more. Preferred among these are p-phenylenediamine or quinoline antioxidants, with p-phenylenediamine antioxidants being more preferred.

The antioxidant may be commercially available from Seiko Chemical Co., Ltd., Sumitomo Chemical Co., Ltd., Ouchi Shinko Chemical Industrial Co., Ltd., Flexsys, etc.

The amount of the antioxidant per 100 parts by mass of the total rubber component is preferably 0.5 parts by mass or more, more preferably 1 part by mass or more, but is preferably 10 parts by mass or less, more preferably 5 parts by mass or less. When the amount is within the range indicated above, the advantageous effect tends to be better achieved.

The rubber compositions may contain a wax.

Any wax may be used, and examples include petroleum waxes such as paraffin waxes and microcrystalline waxes; naturally-occurring waxes such as plant waxes and animal waxes; and synthetic waxes such as polymers of ethylene, propylene, or other similar monomers. These may be used alone or in combinations of two or more.

The wax may be commercially available from Ouchi Shinko Chemical Industrial Co., Ltd., Nippon Seiro Co., Ltd., Seiko Chemical Co., Ltd., etc.

The amount of the wax per 100 parts by mass of the total rubber component is preferably 0.5 parts by mass or more, more preferably 1 part by mass or more, but is preferably 10 parts by mass or less, more preferably 7 parts by mass or less. When the amount is within the range indicated above, the advantageous effect tends to be better achieved.

In addition to the above-mentioned components, the rubber compositions may contain additives commonly used in the tire industry. Examples of such additives include vulcanizing agents other than sulfur (for example, organic crosslinking agents, organic peroxides), calcium carbonate, mica such as sericite, aluminum hydroxide, magnesium oxide, magnesium hydroxide, clay, talc, alumina, and titanium oxide. The amount of each of these components per 100 parts by mass of the total rubber component is preferably 0.1 parts by mass or more, but is preferably 200 parts by mass or less.

The rubber compositions may be prepared, for example, by kneading the components using a rubber kneading machine such as an open roll mill or a Banbury mixer, and then vulcanizing the kneaded mixture.

The kneading conditions are as follows: in a base kneading step of kneading additives other than crosslinking agents (vulcanizing agents) and vulcanization accelerators, the kneading temperature is usually 100 to 180°C, preferably 120 to 170°C, while in a final kneading step of kneading vulcanizing agents and vulcanization accelerators, the kneading temperature is usually 120°C or lower, preferably 80 to 110°C. The composition obtained after kneading vulcanizing agents and vulcanization accelerators is usually vulcanized by press vulcanization, for example. The vulcanization temperature is usually 140 to 190°C, preferably 150 to 185°C.

The rubber compositions may be used in tire components (i.e., as tire rubber compositions), including, for example, treads (cap treads), sidewalls, base treads, undertreads, clinches, bead apexes, breaker cushion rubbers, rubbers for carcass cord topping, insulations, chafers, and innerliners, and side reinforcement layers of run-flat tires. The rubber compositions are especially suitable for use in treads and/or sidewalls.

The tires of the present invention can be produced from the rubber compositions by usual methods. Specifically, the unvulcanized rubber compositions containing additives as needed may each be extruded into the shape of a tire component (particularly a tread and/or a sidewall) and then formed and assembled with other tire components in a tire building machine in a usual manner to build an unvulcanized tire, which may then be heated and pressurized in a vulcanizer to produce a tire.

Non-limiting examples of the tires include pneumatic tires, solid tires, airless tires, and crawlers. Preferred among these are pneumatic tires.

The tires are suitable for use as tires for passenger vehicles, large passenger vehicles, large SUVs, trucks and buses, or two-wheeled vehicles, or as racing tires, winter tires (studless winter tires, cold weather tires, snow tires, studded tires), all-season tires, run-flat tires, aircraft tires, or mining tires, for example.

### EXAMPLES

The present invention is specifically described with reference to, but not limited to, examples.

The chemicals used in the examples and comparative examples are listed below.
NR: TSR20
SBR 1: SBR 1 (modified S-SBR, styrene content: 25% by mass) obtained in Production Example 1 described below
SBR 2: SBR 2 (modified S-SBR, styrene content: 10% by mass) obtained in Production Example 2 described below
SBR 3: SBR1502 (nonmodified SBR, styrene content: 24% by mass) available from Zeon Corporation
SBR 4: SBR 4 (modified S-SBR, styrene content: 45% by mass) obtained in Production Example 3 described below
BR: BR150B (cis content: 98% by mass) available from Ube Industries, Ltd.
Carbon black 1: N220 (N₂SA: 111 m²/g, DBP: 115 mL/100 g) available from Cabot Japan K.K.
Carbon black 2: N134 (N₂SA: 148 m²/g, DBP: 123 mL/100 g) available from Cabot Japan K.K.
Compound A: 2,4-dihydroxybenzohydrazide available from Tokyo Chemical Industry Co., Ltd.
Compound B: 3,5-dihydroxybenzohydrazide available from FUJIFILM Wako Pure Chemical Corporation
Wax: Ozoace 0355 available from Nippon Seiro Co., Ltd.
Antioxidant: NOCRAC 6C (N-(1,3-dimethylbutyl)-N'-phenyl-p-phenylenediamine) available from Ouchi Shinko Chemical Industrial Co., Ltd.
Stearic acid: stearic acid "TSUBAKI" available from NOF Corporation
Zinc oxide: zinc oxide #2 available from Mitsui Mining & Smelting Co., Ltd.
Sulfur: powdered sulfur available from Tsurumi Chemical Industry Co., Ltd.
Vulcanization accelerator: NOCCELER NS (N-t-butyl-2-benzothiazolylsulfenamide, TBBS) available from Ouchi Shinko Chemical Industrial Co., Ltd.

### (Production Example 1)

An autoclave reactor is charged with cyclohexane, tetrahydrofuran, styrene, and 1,3-butadiene. The temperature of the contents of the reactor is adjusted to 20°C, and then n-butyllithium is added to initiate polymerization. The polymerization is carried out under adiabatic conditions, and the maximum temperature reaches 85°C. Once the polymerization conversion ratio reaches 99%, additional butadiene is added, followed by further polymerization for five minutes. Subsequently, 3-dimethylaminopropyltrimethoxysilane is added as a modifier, and the reaction is performed for 15 minutes. After completion of the polymerization reaction, 2,6-di-tert-butyl-p-cresol is added. Then, the solvent is removed by steam stripping. The resulting product is dried on hot rolls adjusted at 110°C to obtain a modified styrene-butadiene rubber (SBR 1).

### (Production Example 2)

A modified styrene-butadiene rubber (SBR 2) is prepared under the same conditions as in Production Example 1, except that the amount of styrene charged is changed.

### (Production Example 3)

A modified styrene-butadiene rubber (SBR 4) is prepared under the same conditions as in Production Example 1, except that the amount of styrene charged is changed.

Simulations were performed according to Tables 1 to 5. Tables 1 to 5 show the results.

The production conditions and test conditions are described below.

### (Production conditions)

The chemicals other than the sulfur and vulcanization accelerator are kneaded in a 1.7 L Banbury mixer (Kobe Steel, Ltd.) at 150°C for four minutes. Then, the sulfur and vulcanization accelerator are added to the kneaded mixture, and they are kneaded in an open roll mill at 80°C for five minutes. The resulting unvulcanized rubber composition is press-vulcanized at 170°C for 10 minutes using a 0.5 mm-thick mold to obtain a vulcanized rubber composition.

### (Cut and chip resistance test conditions)

No. 3 dumbbell specimens are prepared from the vulcanized rubber composition in accordance with JIS K6251:2010. The tensile strength at break (TB, MPa) and elongation at break (EB, %) of the specimens are measured to calculate a value of TB×EB/2 (MPa·%), which is expressed as an index relative to a reference example (= 100). Thus, a higher index indicates better cut and chip resistance.

The reference examples in Tables 1, 2, 3, 4, and 5 are Comparative Example 1, Comparative Example 5, Example 6, Example 8, and Example 12, respectively.

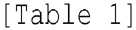

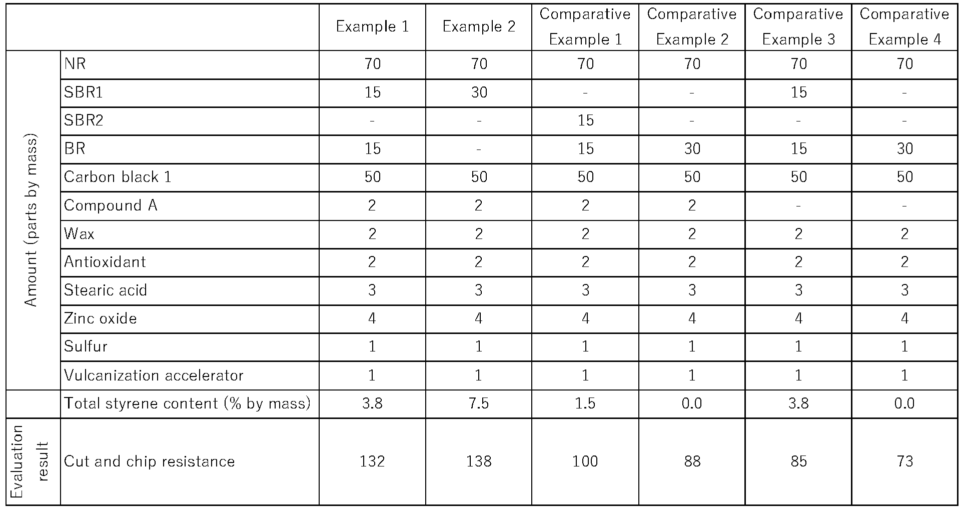

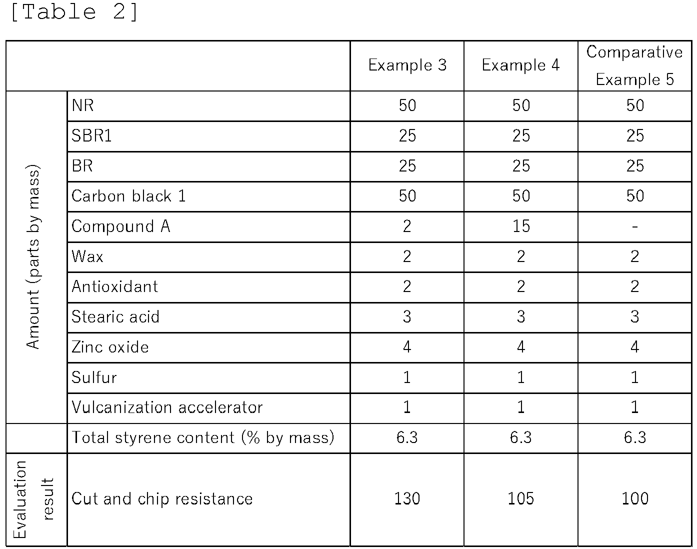

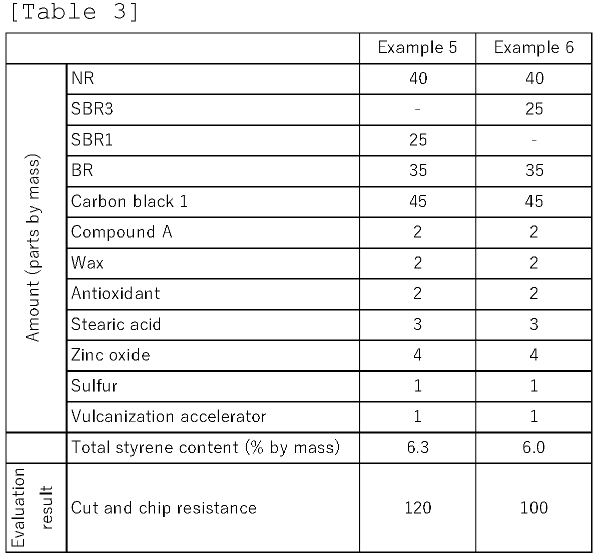

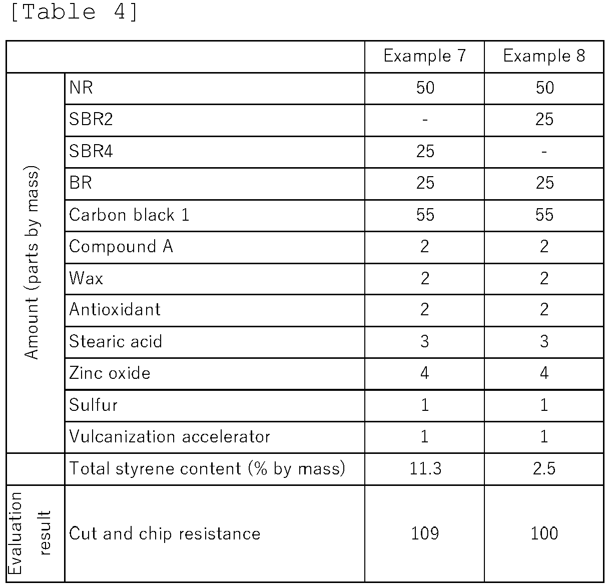

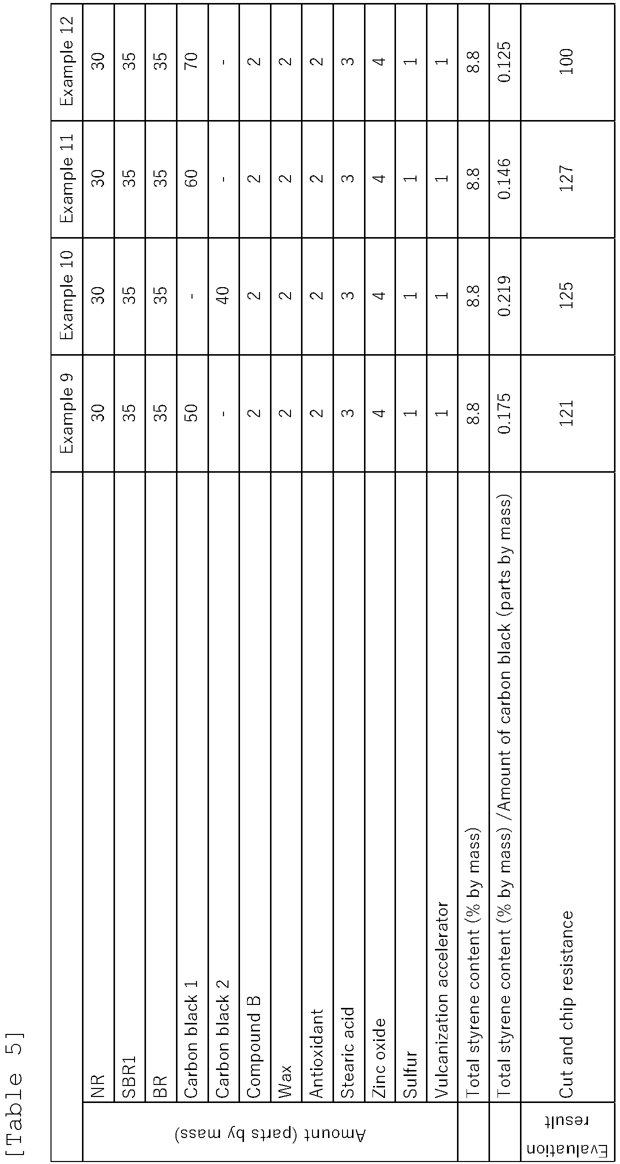

Provided are rubber compositions and tires having improved cut and chip resistance. Included are tire rubber compositions which contain at least one rubber component wherein the total styrene content based on the total rubber component is 2% by mass or higher, carbon black, and a benzohydrazide compound having two or more hydroxy groups.

## Claims

1. A tire, comprising a tire component comprising a tire rubber composition,
the rubber composition comprising:
at least one rubber component wherein a total styrene content based on the total rubber component is 2% by mass or higher;
carbon black; and
a benzohydrazide compound having two or more hydroxy groups.

2. The tire according to claim 1,
wherein, in the rubber composition, the total styrene content (% by mass) based on the total rubber component is greater than an amount (parts by mass) of the benzohydrazide compound per 100 parts by mass of the total rubber component.

3. The tire according to claim 1 or 2,
wherein the rubber composition has a styrene-butadiene rubber content of 10 to 50% by mass based on 100% by mass of the total rubber component.

4. The tire according to any one of claims 1 to 3,
wherein the rubber composition comprises a styrene-butadiene rubber having a functional group containing at least one atom selected from the group consisting of a nitrogen atom, an oxygen atom, and a silicon atom.

5. The tire according to any one of claims 1 to 4,
wherein the rubber composition comprises a styrene-butadiene rubber having a styrene content of 20% by mass or higher.

6. The tire according to any one of claims 1 to 5,
wherein the rubber composition has a ratio of the total styrene content (% by mass) based on the total rubber component to an amount (parts by mass) of the carbon black per 100 parts by mass of the total rubber component of 0.130 or more.

7. The tire according to any one of claims 1 to 6,
wherein the benzohydrazide compound has two hydroxy groups.

## Patentansprüche

1. Reifen, umfassend eine Reifenkomponente, die eine Kautschukzusammensetzung umfasst,
wobei die Kautschukzusammensetzung umfasst:
zumindest eine Kautschukkomponente, wobei der Gesamtstyrolgehalt, bezogen auf die gesamte Kautschukkomponente, 2 Masse-% oder mehr beträgt;
Kohleschwarz; und
eine Benzohydrazidverbindung mit zwei oder mehr Hydroxygruppen.

2. Reifen nach Anspruch 1,
wobei in der Kautschukzusammensetzung der Gesamtstyrolgehalt (Masse-%), bezogen auf die gesamte Kautschukkomponente, größer ist als eine Menge (Massenteile) der Benzohydrazidverbindung pro 100 Massenteile der gesamten Kautschukkomponente.

3. Reifen nach Anspruch 1 oder 2,
wobei die Kautschukzusammensetzung einen Styrol-Butadien-Kautschuk-Gehalt von 10 bis 50 Masse-%, bezogen auf 100 Masse-% der gesamten Kautschukkomponente, aufweist.

4. Reifen nach einem der Ansprüche 1 bis 3,
wobei die Kautschukzusammensetzung einen Styrol-Butadien-Kautschuk mit einer funktionellen Gruppe umfasst, die zumindest ein Atom enthält, das aus der Gruppe ausgewählt ist, die aus einem Stickstoffatom, einem Sauerstoffatom und einem Siliciumatom besteht.

5. Reifen nach einem der Ansprüche 1 bis 4,
wobei die Kautschukzusammensetzung einen Styrol-Butadien-Kautschuk mit einem Styrolgehalt von 20 Masse-% oder mehr umfasst.

6. Reifen nach einem der Ansprüche 1 bis 5,
wobei die Kautschukzusammensetzung ein Verhältnis des Gesamtstyrolgehalts (Masse-%), bezogen auf die gesamte Kautschukkomponente, zu einer Menge (Masseteile) des Kohleschwarzes pro 100 Masseteile der gesamten Kautschukkomponente von 0,130 oder mehr aufweist.

7. Reifen nach einem der Ansprüche 1 bis 6,
wobei die Benzohydrazidverbindung zwei Hydroxygruppen aufweist.

## Revendications

1. Pneu comprenant un composant de pneu comprenant une composition de caoutchouc de pneu,
la composition de caoutchouc comprenant :
au moins un composant de caoutchouc dans lequel la teneur totale en styrène, par rapport au composant de caoutchouc total, est de 2 % en masse ou plus ;
du noir de carbone ; et
un composé benzhydrazide ayant deux ou plus de deux groupes hydroxy.

2. Pneu selon la revendication 1, dans lequel, dans la composition de pneu, la teneur totale en styrène (% en masse), par rapport au composant de caoutchouc total, est supérieure à la quantité (parties en masse) du composé benzhydrazide pour 100 parties en masse du composant de caoutchouc total.

3. Pneu selon la revendication 1 ou 2, dans lequel la composition de caoutchouc a une teneur en caoutchouc de styrène-butadiène de 10 à 50 % en masse pour 100 % en masse du composant de caoutchouc total.

4. Pneu selon l'une quelconque des revendications 1 à 3, dans lequel la composition de caoutchouc comprend un caoutchouc de styrène-butadiène ayant un groupe fonctionnel contenant au moins un atome choisi dans l'ensemble constitué par un atome d'azote, un atome d'oxygène, et un atome de silicium.

5. Pneu selon l'une quelconque des revendications 1 à 4, dans lequel la composition de caoutchouc comprend un caoutchouc de styrène-butadiène ayant une teneur en styrène de 20 % en masse ou plus.

6. Pneu selon l'une quelconque des revendications 1 à 5, dans lequel la composition de caoutchouc a un rapport de la teneur totale en styrène (% en masse) basée sur le composant de caoutchouc total à la quantité (parties en masse) du noir de carbone par 100 parties en masse du composant de caoutchouc total de 0,130 ou plus.

7. Pneu selon l'une quelconque des revendications 1 à 6, dans lequel le composé benzhydrazide a deux groupes hydroxy.
